# EUROPEAN PATENT SPECIFICATION

(11) **EP 0 330 514 B1**
(45) Date of publication and mention of the grant of the patent: **23.11.1994**
(21) Application number: 89301891.1
(22) Date of filing: 24.02.1989
(51) Int. Cl.: H04B 1/16, H04Q 7/02, H04M 1/72, G08B 3/10

(54) **Battery powered radio devices having a battery saving function**
Batteriegespeiste Funkgeräte mit Batterieschonfunktion
Dispositifs radioalimentés par batterie avec une fonction d'épargne de batterie

(30) Priority: 25.02.1988 JP 43189/88
(43) Date of publication of application: 30.08.1989
(73) Proprietor: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Ito, Koichi c/o Patent Division Toshiba Corp., Minato-ku Tokyo 105 (JP); Oonishi, Yasuo c/o Patent Division Toshiba Corp., Minato-ku Tokyo (JP)
(74) Representative: Shindler, Nigel

(56) References cited:
- EP-A- 0 255 048
- PATENT ABSTRACTS OF JAPAN vol. 12, no. 44 (E-581)(2891) 09 February 88,& JP-A-62 194750 (N.T.T.) 27 August 87.
- PATENT ABSTRACTS OF JAPAN vol. 10, no. 384 (E-466)(2441) 23 December 1986,& JP-A-61 173536 (TOSHIBA CORP.) 05 August 1986.
- NEC RESEARCH AND DEVELOPMENT. no. 77, April 1985, TOKYO JP pages 70 - 79; T.MORI et al: "Information Display Pager"

## Description

### FIELD OF THE INVENTION

This invention relates to the field of battery powered devices such as pagers, cordless telephones, or the like and, more specifically, to battery powered radio devices in which power supply to a radio section thereof is intermittently actuated for saving battery consumption.

### DESCRIPTION OF THE RELEVANT ART

Generally, it is required to reduce consumption of electric power in a battery powered radio device since a battery has a limited power capacity.

In prior art battery powered radio devices such as pagers, cordless telephones, and the like a conventional battery saving technique has been adopted to save battery consumption. According to this technique, the power supply of the receiving section of the radio device is periodically turned on and off in synchronization with the received data signals.

### BACKGROUND OF THE INVENTION

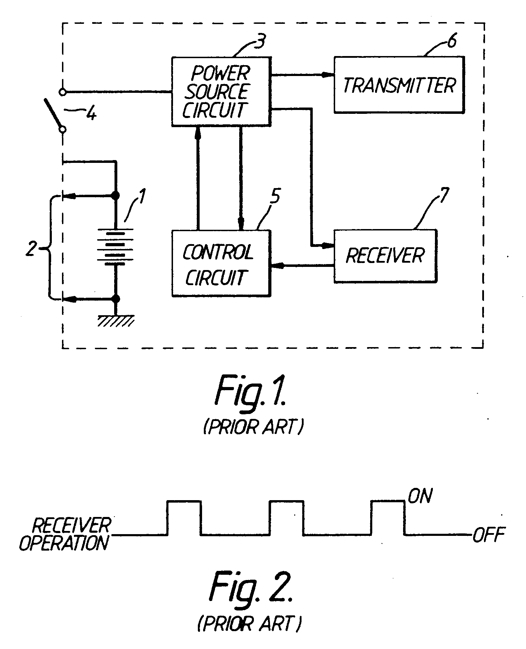

The block diagram of Fig. 1 shows one example of a prior art cordless telephone. A battery 1, which is chargeable through a charging terminal 2, supplies power to a power source circuit 3 by closing a power switch 4. Power source circuit 3, under control of a control circuit 5, converts the voltage from battery 1 to an appropriate voltage, and supplies this voltage to control circuit 5, to a transmitter 6 and to a receiver 7.

In a waiting state, i.e., awaiting an incoming call, the converted voltage from power source circuit 3, controlled by circuit 5, is intermittently applied to receiver 7. Upon receipt of a group signal, the receiver is synchronised with the transmitted signal from a base station for receipt of further intermittent signals. Consequently, receiver 7 carries out reception operation intermittently as shown in Fig. 2, thereby saving power consumption of the cordless telephone. Systems of this general kind are shown in EP-A-0255048 and JP-A-61173536.

A significant problem in these prior art systems is the inability of the user of the battery powered radio to detect whether the system is operating properly. In particular, it has become necessary for the user to determine whether the communication link from the base station to the radio receiver is operating properly. Any defect in the base transmitter, or in the radio receiver, or due to interference could prevent the reception and processing of the data at the receiver. Not only is it important to identify the existence of a problem but to indicate it to the user in a manner which will avoid a large consumption of power.

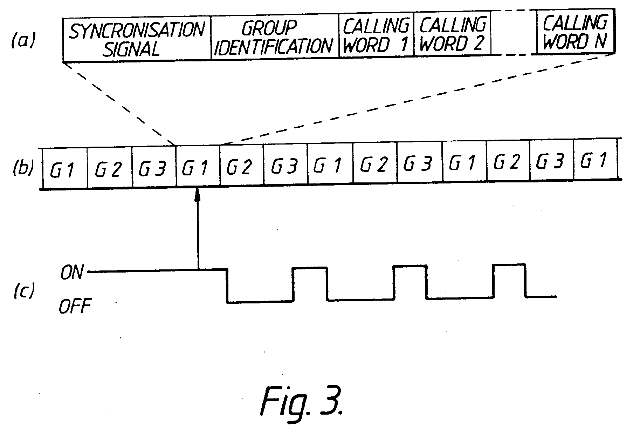

The synchronized operation of several battery powered radio devices incorporating the prior art battery saving function is shown in Figs. 3(a)-(c).

Referring to Fig. 3(b), all devices in a system are divided into M groups, for example, 3 groups. A base unit repeatedly broadcasts a frame signal consisting of M group signals. Each group signal includes preamble words and N calling words (Fig. 3(a)). The preamble word includes a predetermined synchronization signal for synchronization of received signals and a group identification signal for showing that the following paging words are addressed to pagers belonging to the group designated by the group identification signal. In response to a calling request, an identification signal of the device to be called is assigned to one of calling words 1 to N.

Referring to Fig. 3(c), if a device is turned on, the device examines the received signals to detect the synchronization signal. Once detecting the synchronization signal, the device performs intermittent reception so that only a group signal to the device is received.

In fact, prior art radio devices such as the cordless devices mentioned above have not even provided any indication whether the power source switch was closed. Apparently, if such an indicator was used to display the activation of the source, the display would emit light continuously thereby increasing power consumption and shortening the active life of the radio devices. It would be possible to increase the capacity of the battery, but this would necessarily result in high cost, increased weight and longer charging times.

### SUMMARY OF THE INVENTION

It is accordingly an object of the present invention to provide an indication to the user of the battery powered radio whether the communication link is adversely effected.

It is a further object of the present invention to indicate a fault condition while saving battery consumption.

It is a still further object of the present invention to provide an improved radio device for indicating that the power source is activated while saving power consumption.

In achieving these objects, as embodied and described herein, the invention incorporates an indicator for indicating both the activation of the power source and the intermittent reception and processing of transmitted signals.

Accordingly the present invention provides a radio device comprising:
receiving means for receiving signals broadcast over one or more of radio channels;
a power supply means for supplying said receiving means with power;
an indicator circuit coupled to said power supply means; and
power supply control means, coupled to said power supply means and said indicator circuit, for controlling said power supply means so that said receiving means is intermittently triggered by power supply signals;
characterised in that said indicator circuit is triggered in synchronisation with at least some of the power supply signals that trigger said receiving means, such that the indicator circuit is actuated for a time period equal to or shorter than the time period of activation of the receiver circuit.

The prior art problems, discussed above, are solved by the principle of the present invention. In this invention, an indicator is triggered in synchronization, with at least some of the signals that trigger the receiving means. Consequently, a user is informed of the operational state of the radio apparatus by observing the intermittent indication while minimizing power consumption. In some embodiments, as described below, the indicator also provides an indication of the state of the power supply (i.e. whether activated).
Figure 1 is a block diagram of a conventional cordless telephone;
Figure 2 is a diagram for explaining the battery saving techniques used in conventional cordless telephones;
Figures 3a - 3c are a diagram for explaining the synchronized operation of conventional battery powered radio devices;
Figure 4 is a block diagram of a cordless telephone embodying the present invention incorporating computer control;
Figure 5 is a flow chart showing one embodiment that can be incorporated in the cordless telephone shown in Fig. 4;
Figures 6 (a) and (b) are timing diagrams for explaining the operation of the invention in accordance with the embodiment of Fig. 5;
Figure 7 is a flow chart showing another embodiment that can be incorporated in the cordless telephone shown in Fig. 4;
Figures 8 (a) and (b) are timing diagrams for explaining the operation of the invention in accordance with the embodiment of Fig. 7;
Figure 9 is a flow chart showing yet another embodiment that can be incorporated in the cordless telephone shown in Fig. 4;
Figure 10 (a) and (b) are timing diagrams for explaining the operation of the invention in accordance with the embodiment of Fig. 9;
Figure 11 is a further embodiment of a cordless telephone embodying the present invention incorporating hard wire control;
Figure 12 (a) and (b) are timing diagrams for explaining the operation of the invention in accordance with Fig. 11.

### DETAILED DESCRIPTION

A preferred embodiment of the present invention applied in a cordless telephone will be described with reference to the accompanying drawings. The present invention may likewise be employed in other kinds of radio apparatus (e.g., pagers, etc.).

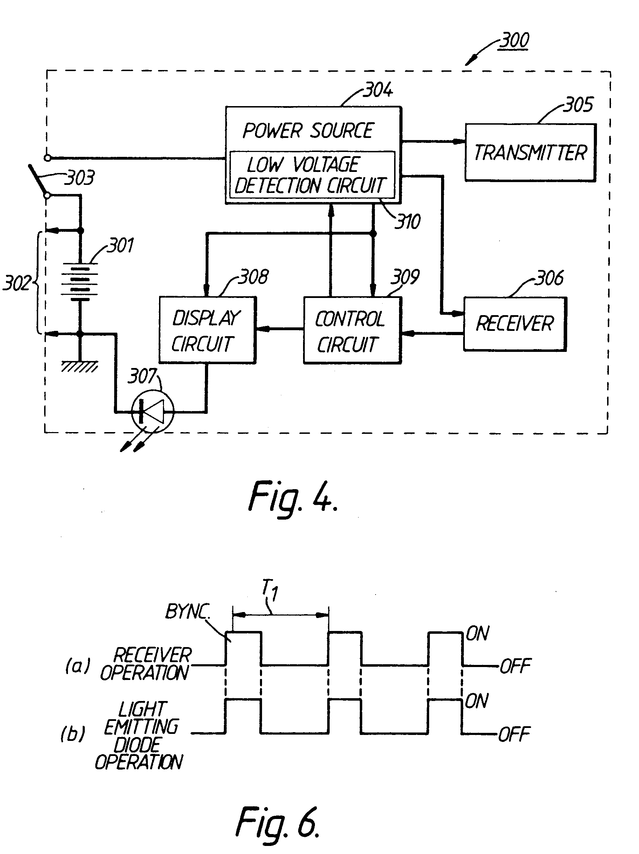

Fig. 4 is a schematic block diagram showing an arrangement of a cordless telephone according to an embodiment of the present invention.

Referring to Fig. 4, cordless telephone 300 comprises: a rechargeable battery 301, a charging terminal 302, an on/off switch 303, a power source 304 for supplying power from battery 301 to each component of cordless telephone 300, a transmitter 305 receiving power from power source 304 for transmitting signals over a radio connection link, a receiver 306 receiving power from power source 304 for receiving signals transmitted over radio communication link, a light emitting diode (LED) 307 for emitting light, a display circuit 308 for applying drive current to LED 307, and a control circuit 309 including a microprocessor for controlling the overall operation of cordless telephone 300. Power source 304 comprises a low voltage detection circuit 310 for detecting when the voltage supplied from battery 301 drops below a preset threshold value.

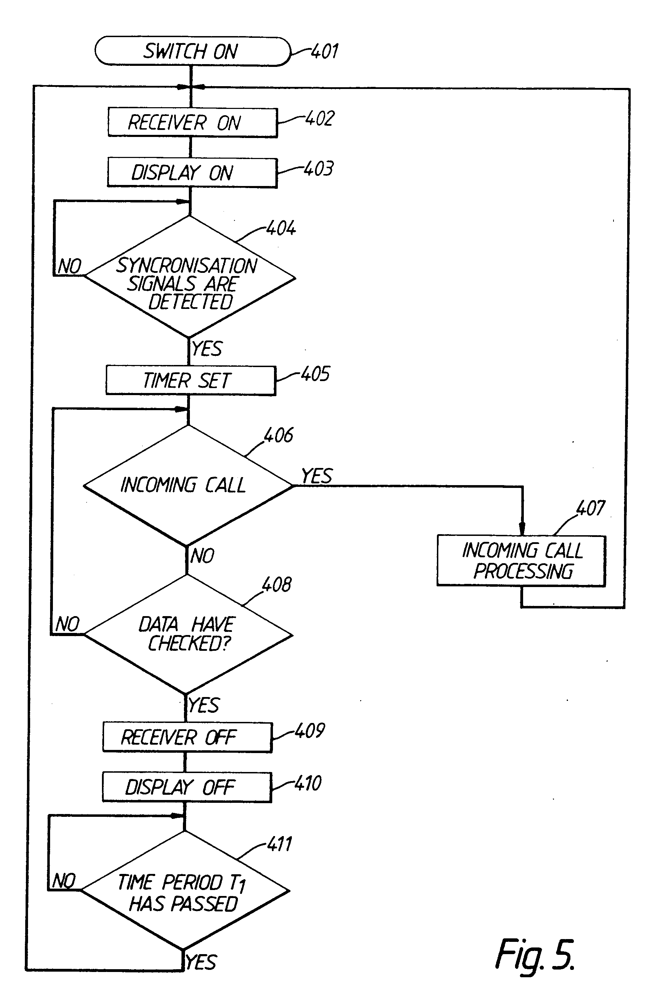

Fig. 5 is a flow chart showing the operation of cordless telephone 300. Referring to Fig. 5, when on/off switch 303 is turned on by a user (step 401), control circuit 307 is powered by power source 304, which receives power from battery 301. Control circuit 309 controls power source 304 so that power is supplied to receiver 306 (step 402) and power is supplied to display circuit 308. As a result, drive current is applied to LED 307 from display circuit 308 (step 403).

Next, responsive to the detection of a synchronization signal followed by a group identification signal received by receiver 306 (step 404), control circuit 309 sets the internal timer thereof to zero for counting the time period for intermittent reception of the respective synchronized group signals (step 405). Control circuit 309 also checks whether the subsequently received signals include an incoming call to the cordless telephone by comparing a code accompanying the subsequent signals with a predetermined identification code for the cordless telephone, which is stored in control circuit 304 (step 406).

In the event that an incoming call is detected in step 406, the operation proceeds to the incoming call processing step (step 407). In the incoming call processing step, intermittent reception is temporarily stopped. Thereafter, the operation returns to step 401. If all the subsequent signals have been analyzed without the detection of an incoming call (step 408), control circuit 309 controls power source 304 so that the power supplied to receiver 306 is turned off (step 409) and drive current, via display current 308, is not applied to LED 307 (step 410). After the expiration of time period T₁ (step 411), the operation returns to step 402.

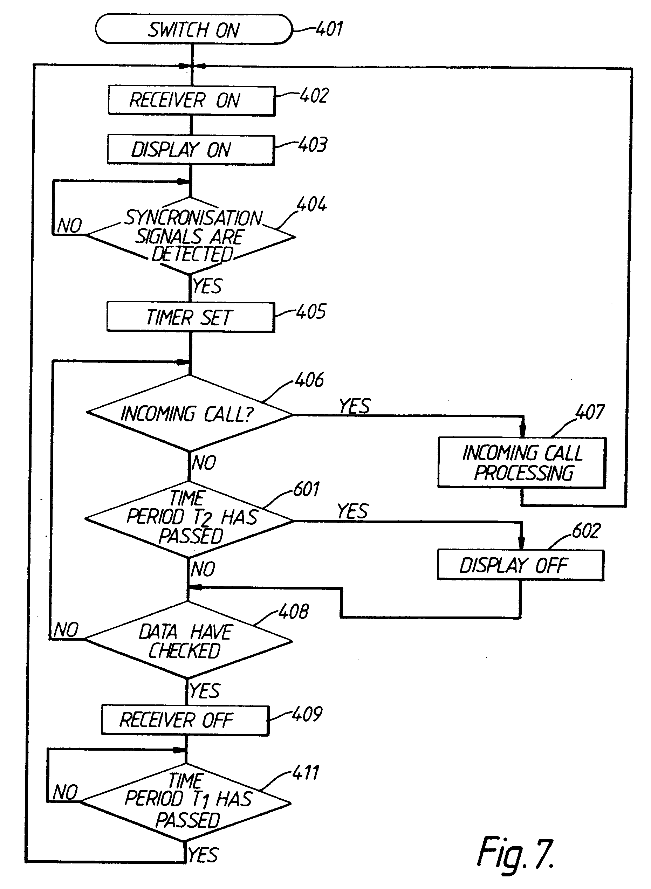

After on/off switch 303 is turned on, control circuit 309 intermittently applies converted voltage from power source 304 to receiver 306. Receiver 306 thereby performs an intermittent receiving operation as shown in Fig. 6(a) in synchronization with its respectively received group signals. Also, control circuit 309 intermittently triggers display circuit 308 synchronously with this intermittent receiving operation. Each time display circuit 308 is intermittently triggered, display circuit 308 produces a drive current from the voltage supplied from power source 304 for activating LED 307. Consequently, LED 307 emits light intermittently as shown Fig. 6(b) synchronously and coincidently with the intermittent receiving operation of receiver 306. Thus, as LED 307 emits light intermittently, responsive to the intermittent receiving operation of receiver 306, the intermittent light emission of LED 306 shows that the cordless telephone performs intermittent operation by receiving signals from a base unit.

As long as the LED emits light intermittently, the system is operating properly. However, as soon as base unit fails to broadcast signals due to some defect or the signals from the base unit fail to reach the cordless telephone or receiver 306 breaks down, LED 307 will vary its operation and emit light continuously. This occurs since the operation stops at step 404 and does not proceed to step 405. Accordingly, a user of the cordless telephone may confirm whether the cordless telephone is operating properly by observing whether LED 307 emits light continuously or intermittently.

Also, the light emission of LED 307 indicates that power is fully supplied to operate the cordless telephone and the power source is in circuit. It should be noted that since LED 307 is intermittently activated, the power consumption required for the display is greatly reduced compared with what would be required if the LED was lit continuously.

When power is consumed by operation of the cordless telephone, resulting in the discharge of battery 301 and its resulting voltage drop, low voltage detection circuit 310 detects the voltage drop when it falls below a preset threshold value. When the preset voltage drop occurs, the operation of power source 304 is suspended. Display circuit then ceases to supply current to light emitting diode 307 and to prevent its further activation. Therefore, the user of the cordless telephone will become aware that battery 301 has been cut off.

Figure 7 is a flow chart showing another embodiment that can be incorporated in the cordless telephone shown in Fig. 4. In Fig. 7, the same reference numbers are given to steps which perform the same function as the corresponding steps shown in the flow chart of Fig. 5. Referring to Fig. 7, immediately after power is supplied to receiver 306 (step 402), LED 307 is lit (step 403). However, LED 307 will turn off after time period T₂ has elapsed (step 602) even though receiver 306 hasn't yet turned off (step 409).

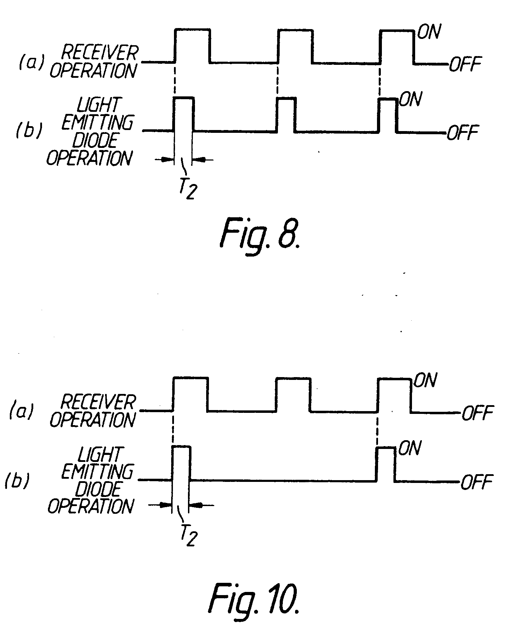

Figs. 8(a) and (b) show the on/off state of receiver 306 and LED 307 according to the operational flow chart of Fig. 7. Referring to Fig. 8, control circuit 309 triggers receiver 306 to perform intermittent reception as shown in Fig. 8(a) and actuates display circuit 308 for a time shorter than this reception period. Consequently, display circuit 309 supplies current to LED 307 for a period shorter than the reception operation period, as shown in Fig. 8(b).

Accordingly, since current is supplied to LED 307 for a period shorter than the reception operation period, the required power consumption for light emission is even less than the operation shown in Figs. 5 and 6, while still achieving all the benefits of the latter system.

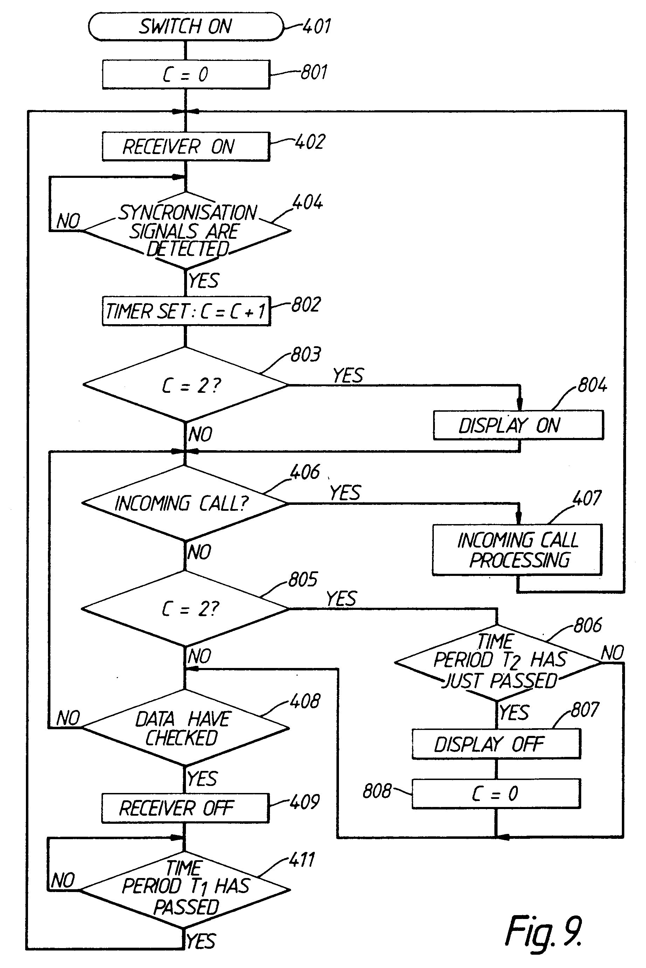

Fig. 9 is a flow chart showing yet another embodiment that can be incorporated in the cordless telephone shown in Fig. 4. In Fig. 9, the same reference numerals are given to steps which perform the same function as the corresponding steps shown in the flow chart of Fig. 4. Referring to Fig. 9, after on/off switch 303 is turned on (step 401), count value C is initially set to zero (step 801) in control circuit 309. After the processing of steps 402 and 404, as previously described with respect to Fig. 5, control circuit 309 sets the internal timer thereof to zero and increments its count value C by one (step 802). In step 803, control circuit 309 checks whether count value C is equal to two. If equal to two, control circuit 309 controls display circuit 308 so that drive current is applied to LED 307 (step 804). The incoming call (step 406), is then examined, as previously described with respect to Fig. 5. If all the subsequent signals have been analyzed without the detection of an incoming call, control circuit 309 again checks whether the count value C is equal to two (step 805). If the value is equal to two, control circuit 309 determines whether the time counted by the interval timer, previously set to zero in step 802, has exceeded time period T₂ (step 806). If the counted time exceeds time period T₂, control circuit 309 controls display circuit 308 to prevent drive current from being supplied to LED 307 (step 807) and to reset the count value C to zero (step 808). The operation then returns to the checking step of 408. If the counted time does not exceed T₂ (step 806), the operation returns to step 408 without proceeding to steps 807 and 808.

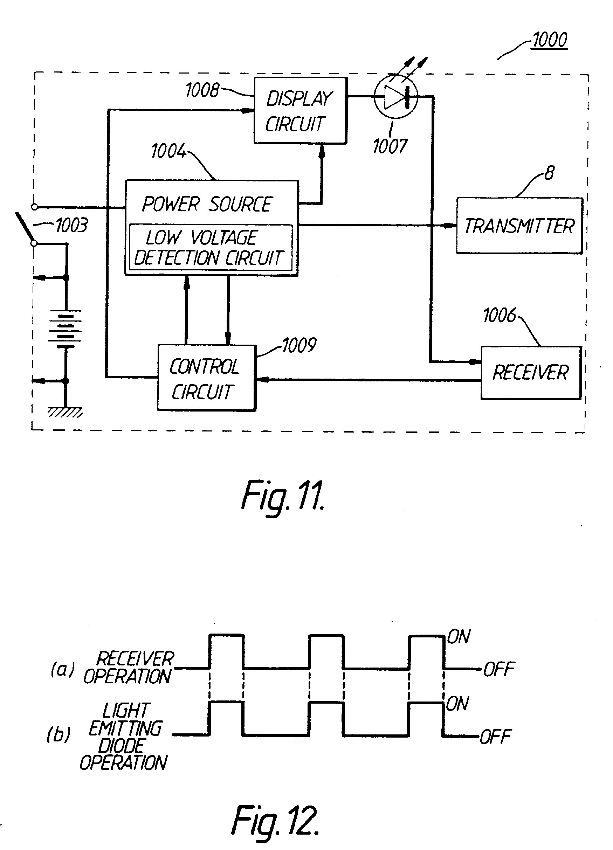

Figs. 10(a) and (b) show the on/off state of receiver 306 and LED 307 according to the operations shown in Fig. 9. Referring to Fig. 10, control circuit actuates receiver 306 as shown in Fig. 10(a) for intermittent reception, while activating display circuit 308 once for every two actuations of receiver 306. Also, the period of actuation for display circuit 308 is shorter than the reception period. Consequently, display circuit 308 supplies power to LED 307 only once for every two reception actuations, and for a period of time shorter than the reception actuation time. Consequently, light emitting diode 307 is intermittently lit once for every two reception actuations, as shown in Fig. 10(b), and for a period of time shorter than the reception time. As with all previous embodiments the indicator is triggered in synchronization with at least some of the signals that trigger the receiver. Thus, a user is informed of the operational state of the radio apparatus by observing the intermittent indication while still minimizing power consumption.

According to this operation, since current is fed to LED 307 once for each two times of reception actuation, the power consumption for light emission is even less than the operations discussed in reference to Figs. 5-8. It should be noted that the period of actuation for display circuit 308 (T₂) is preferably selected so that a user will recognize the emission of light from LED 307. Also, while display circuit 308 is actuated once for every two reception actuations, in this embodiment it may be actuated once for every n times. The number n may be preferably selected so that a user will recognize the light emitted from diode 307 while concomitantly conserving battery consumption.

In this embodiment, display circuit 308 is not actuated until a synchronization signal is detected (step 404 and 804 of Fig. 9). Therefore, in the event that the cordless telephone does not perform properly (e.g., receiver fails, base unit fails to broadcast or transmitted signals fail to reach the receiver) LED 306 will not emit any light even after on/off switch 303 is closed. This will result in less power consumption than would occur with the previous embodiments.

Fig. 11 is a schematic block diagram shown an arrangement of a cordless telephone 1000 according to another embodiment of the present invention.

In the embodiment shown in Fig. 11, display circuit 1008 and light emitting diode (LED) 1007 are inserted between power source circuit 1004 and receiver 1006. Thus, the current output from power source circuit 1004 is fed to receiver 1006 through display circuit 1008 and LED 1007, thereby causing receiver 1006 to receive signals broadcast over a radio channel. Consequently, LED 1007 is automatically lit during the reception period of receiver 1006. When on/off switch 1003 is closed, control circuit 1009 outputs current intermittently to receiver 1006 via display circuit 1008 and power source circuit 1004. Thus, the intermittent current from power source circuit 1004 is fed both to receiver 1006 and LED 1007. Consequently, receiver 1006 is made to receive intermittently as shown in Fig. 12(a) while the LED 1007 emits light synchronously with this intermittent receiving action, as shown in Fig. 12(b).

As with the previous embodiments, the LED is triggered in synchonously with at least some of the signals that trigger the receiver. In fact, like Fig. 5, the intermittent operation of the LED coincides with the operation of the receiver. Consequently, the user is informed of the operation state of the receiver while power is conserved. Also, in accordance with this embodiment, it is only necessary to change the prior art hardware circuit arrangement, rather than changing the software used in the microprocessor of control circuit 1009, as with the previous embodiments.

It should be noted that a lamp, a liquid crystal display device, or the like could be used in lieu of a light emitting diode, as shown in the above embodiments. In particular, a liquid crystal display could also efficiently save power consumption.

## Claims

1. A radio device comprising:
receiving means (306) for receiving signals broadcast over one or more of radio channels;
a power supply means (301, 302, 303) for supplying said receiving means with power;
an indicator circuit (307, 308) coupled to said power supply means; and
power supply control means (309), coupled to said power supply means and said indicator circuit, for controlling said power supply means so that said receiving means (306) is intermittently triggered by power supply signals;
characterised in that said indicator circuit is triggered in synchronisation with at least some of the power supply signals that trigger said receiving means, such that the indicator circuit is actuated for a time period equal to or shorter than the time period of activation of the receiver circuit.

2. The device of claim 1 wherein said power supply control means (309) controls said power supply means (301, 302, 303) so that power supply of said indicator circuit, is turned on when power supply of said receiving means is turned on.

3. The device of claim 1 or claim 2 wherein said power supply control means (309) controls said power supply means (301, 302, 303) so that power supply of said indicator circuit is turned off when power supply of said receiving means is turned off.

4. The device of claim 1 or claim 2 further comprising time measuring means for measuring a time period from when said indicator circuit is turned on and wherein the power supplied to said indicator circuit is turned off when the measured time period exceeds a predetermined time period.

5. The device of claim 4 wherein said predetermined time period is shorter than the time period during which said receiving means is turned on.

6. The device of claim 1 wherein said indicator circuit is triggered to turn on once for every n times that the receiving means is turned on.

7. The device of any preceding claim, wherein said indicator circuit comprises a light emitting diodes (307) for emitting light in response to drive current from said power supply means.

8. The device of any preceding claim further comprising a signal detecting means responsive to said receiving means for detecting synchronization signals and wherein said receiving means is intermittently supplied power in synchronization with the detection of said synchronmizsation signals.

9. A radio device according to any preceding claim further comprising:
detection means coupled to said receiving means for detecting a predetermined signal sequence including a synchronization signal within the received signals;
and generating means responsive to said detecting means for generating a power supply signal for said power supply control means in synchronization with the detection of the predetermined signal sequence.

10. A method of operating a radio device and indicating the operational state of the device, the method comprising the steps of:
receiving signals broadcast over one or more radio channels;
detecting synchronization signals within the received signals;
generating power supply signals in synchronization with the detected synchronization signals;
supplying the power supply signal to a receiving means; and
characterised by the step of triggering an indicator in synchronization with at least some of the power supply signals, such that the indicator circuit is actuated for a time period equal to or shorter than the time period of activation of the receiver means.

## Patentansprüche

1. Funkgerät mit:
Empfängermitteln (306) zum Empfangen von über einen oder mehrere Radiokanäle gesendeten Signalen;
Leistungsversorgungsmitteln (301, 302, 303) zur Versorgung der Empfängermittel mit Leistung
einer Anzeigeschaltung (307, 308), welche mit den Leistungsversorgungsmitteln verbunden ist; und
Leistungsversorgungssteuerungsmitteln (309), welche mit den Leistungsversorgungsmitteln und der Anzeigeschaltung verbunden sind, um die Leistungsversorgungsmittel so zu steuern, daß die Empfängermittel (306) intervallweise durch Leistungsversorgungssignale aktiviert werden;
**dadurch gekennzeichnet,** daß die Anzeigeschaltung in Synchronisation mit wenigstens einigen der Leistungsversorgungssignale, welche die Empfängermittel aktivieren, ausgelöst wird, so daß die Anzeigeschaltung für eine Zeitperiode betrieben wird, die gleich ist oder kürzer ist als die Zeitperiode, in der die Empfängerschaltung aktiviert ist.

2. Gerät nach Anspruch 1, wobei die Leistungsversorgungsteuerungsmittel (309) die Leistungsversorgungsmittel (301, 302, 303) so steuern, daß die Leistungsversorgung der Anzeigeschaltung eingeschaltet wird, wenn die Leistungsversorgung der Emfpängermittel eingeschaltet wird.

3. Gerät nach Anspruch 1 oder Anspruch 2, wobei die Leistungsversorgungssteuerungsmittel (309) die Leistungsversorgungsmittel (301, 302, 303) so steuern, daß die Leistungsversorgung der Anzeigeschaltung abgeschaltet wird, wenn die Leistungsversorgung der Empfängermittel abgeschaltet wird.

4. Gerät nach Anspruch 1 oder Anspruch 2, das weiter eine Zeitmeßeinrichtung zum Messen der Zeitperiode aufweist, von wann an die Anzeigeschaltung eingeschaltet ist, und wobei die Leistungsversorgung für die Anzeigeschaltung abgeschaltet wird, wenn die gemessene Zeitperiode eine vorgegebene Zeitperiode übersteigt.

5. Gerät nach Anspruch 4, wobei die vorgegebene Zeitperiode kürzer ist als die Zeitperiode, während der die Empfängermittel eingeschaltet sind.

6. Gerät nach Anspruch 1, wobei die Aktivierung der Anzeigeschaltung einmal ausgelöst wird für jedes n-te Mal, in dem die Empfängermittel eingeschaltet werden.

7. Gerät nach einem der vorhergehenden Ansprüche, wobei die Anzeigeschaltung eine Leuchtdiode (307) zum Abstrahlen von Licht in Reaktion auf einen Betriebsstrom aus den Leistungsversorgungsmitteln aufweist.

8. Gerät nach einem der vorhergehenden Ansprüche, das weiter Signaldetektormittel, welche auf die Empfängermittel reagieren, um Synchronisationssignale nachzuweisen, aufweist und wobei die Empfängermittel intervallweise in Synchronisation mit dem Nachweis der Synchronisationssignale mit Leistung versorgt werden.

9. Funkgerät nach einem der vorhergehenden Ansprüche, welches weiter aufweist:
Detektormittel, welche mit den Empfängermitteln verbunden sind, um eine vorgegebene Signalsequenz einschließlich eines Synchronisationssignals in den empfangenen Signalen nachzuweisen;
und eine Generatoreinrichtung, welche auf die Detektormittel reagiert, um ein Leistungsversorgungssignal für die Leistungsversorgungssteuerungsmittel in Synchronisation mit dem Nachweis der vorgegebenen Signalsequenz zu erzeugen.

10. Verfahren zum Betreiben eines Funkgerätes und zum Anzeigen des Betriebszustandes des Gerätes, wobei das Verfahren die Schritte aufweist:
Empfangen von Signalen, die über einen oder mehrere Radiokanäle gesendet werden;
Nachweisen von Synchronisationssignalen innerhalb der empfangenen Signale;
Erzeugen von Leistungsversorgungssignalen in Synchronisation mit den nachgewiesenen Synchronisationssignalen;
Zuführen des Leistungsversorgungssignals zu Empfängermitteln; und
**gekennzeichnet durch** den Schritt: Aktivieren einer Anzeige in Synchronisation mit wenigstens einigen der Leistungsversorgungssignale, so daß die Anzeigeschaltung für eine Zeitperiode betrieben wird, die gleich ist oder kürzer ist als die Zeitperiode, in der die Empfängermittel aktiviert sind.

## Revendications

1. Appareil de radiodiffusion qui comprend :
des moyens de réception (306) pour capter les signaux radiodiffusés sur un ou plusieurs canaux;
des moyens d'alimentation (301, 302, 303) pour fournir de l'énergie électrique auxdits moyens de réception;
un circuit indicateur (307, 308) couplé auxdits moyens d'alimentation en énergie; et
des moyens de commande (309) couplés auxdits moyens d'alimentation et audit circuit indicateur, afin de commander lesdits moyens d'alimentation de sorte que lesdits moyens de réception (306) sont déclenchés par intermittence par des signaux d'alimentation d'énergie,
caractérisé en ce que ledit circuit indicateur est déclenché en synchronisme avec quelques-uns, au moins, des signaux d'alimentation en énergie qui déclenchent lesdits moyens de réception, ce qui fait que le circuit indicateur est activé pendant une période de temps égale ou inférieure à la durée de la période d'activation du circuit de réception.

2. Appareil selon la revendication 1, caractérisé en ce que lesdits moyens de commande d'alimentation en énergie (309) commandent lesdits moyens d'alimentation en énergie (301, 302, 303) de telle manière que l'alimentation en énergie dudit circuit indicateur est activée quand l'alimentation en énergie desdits moyens de réception est, elle aussi, activée.

3. Appareil selon la revendication 1 ou 2, caractérisé en ce que lesdits moyens de commande d'alimentation en énergie (309) commandent lesdits moyens de fourniture d'énergie (301, 302, 303) de telle manière que ledit circuit indicateur est désactivé quand l'alimentation en énergie desdits moyens de réception est coupée.

4. Appareil selon la revendication 1 ou 2, caractérisé en ce qu'il comprend aussi des moyens chronométriques pour mesurer la période de temps pendant laquelle ledit circuit indicateur est activé et en ce que la fourniture d'énergie audit circuit indicateur se coupe quand la période de temps mesurée dépasse la durée prédéterminée.

5. Appareil selon la revendication 4, caractérisé en ce que ladite période de temps prédéterminée est plus courte que celle durant laquelle lesdits moyens de réception sont activés.

6. Appareil selon la revendication 1, caractérisé en ce que ledit circuit indicateur est activé une fois à chaque activation des moyens de réception.

7. Appareil selon l'une quelconque des revendications précédentes, caractérisé en ce que ledit circuit indicateur comprend des diodes électroluminescentes (307) qui émettent de la lumière en réponse au courant d'activation desdits moyens d'alimentation en énergie.

8. Appareil selon l'une quelconque des revendications précédentes, caractérisé en ce qu'il comprend, en outre, des moyens de détection de signaux qui, en réponse audits moyens de réception, détectent les signaux de synchronisation et en ce que lesdits moyens de réception sont alimentés en énergie par intermittence en synchronisme avec la détection desdits signaux de synchronisation.

9. Appareil selon l'une quelconque des revendications précédentes, caractérisé en ce qu'il comprend, en outre :
des moyens de détection couplés auxdits moyens de réception afin de détecter une séquence de signaux prédéterminée incluant un signal de synchronisation, parmi les signaux reçus; et
des moyens de génération qui, en réponse aux dits moyens de détection, engendrent un signal d'alimentation en énergie pour lesdits moyens de commande d'alimentation en énergie en synchronisme avec la détection de la séquence de signaux prédéterminée.

10. Procédé pour utiliser un appareil de radiodiffusion et pour afficher l'état opérationnel de celui-ci, caractérisé en ce que ledit procédé comprend des étapes consistant :
à recevoir ou à capter des signaux radiodiffusés sur un ou plusieurs canaux radio;
à détecter les signaux de synchronisation faisant partie des signaux reçus;
à générer des signaux d'alimentation d'énergie en synchronisme avec les signaux de synchronisation détectés;
à fournir le signal d'alimentation en énergie à des moyens de réception,
caractérisé par une étape consistant à déclencher un indicateur en synchronisme avec quelques-uns, au moins, des signaux de fourniture d'énergie, ce qui fait que ledit circuit indicateur est activé pendant une période de temps égale ou plus courte que la période d'activation des moyens de réception.
